# EUROPÄISCHE PATENTSCHRIFT

(11) **EP 2 561 218 B1**
(45) Veröffentlichungstag und Bekanntmachung des Hinweises auf die Patenterteilung: **10.12.2014**
(21) Anmeldenummer: 11751897.7
(22) Anmeldetag: 01.09.2011
(51) Int. Cl.: F03D 1/06

(54) **ABNEHMBARE ROTORBLATTSPITZE**
REMOVABLE TIP OF BLADE
AILETTE DÉTACHABLE

(30) Priorität: 10.09.2010 DE 102010040596
(43) Veröffentlichungstag der Anmeldung: 27.02.2013
(73) Patentinhaber: Wobben Properties GmbH, 26605 Aurich (DE)
(72) Erfinder: OLTHOFF, Gerhard, 26607 Aurich (DE)
(74) Vertreter: Eisenführ Speiser
(86) Internationale Anmeldenummer: PCT/EP2011/065116
(87) Internationale Veröffentlichungsnummer: WO 2012/031976

(56) Entgegenhaltungen:
- EP-A1- 1 184 566
- EP-A2- 2 305 999
- EP-A2- 2 317 124
- EP-A2- 2 320 075
- WO-A2-01/46582
- WO-A2-2008/052677
- WO-A2-2009/135902
- WO-A2-2010/023299
- DE-A1-102008 007 910

## Beschreibung

Die Erfindung betrifft ein Rotorblatt mit einer erfindungsgemäßen Rotorblattspitze sowie eine Windenergieanlage mit erfindungsgemäßen Rotorblättern bzw. Rotorblattspitzen.

### Gebiet der Erfindung

Rotorblätter und Rotorblattspitzen sind grundsätzlich im Stand der Technik bekannt. Insbesondere abgebogene Rotorblattspitzen werden z. B. bei Rotorblättern des Herstellers Enercon bereits seit längerem verwendet. Diese bekannten Rotorblattspitzen, die auch kurz Tip genannt werden, verringern die zwangsläufig am Rotorblattende im Betrieb entstehenden Randwirbel und damit unerwünschte Schallemissionen.

Zur technischen Information sei an dieser Stelle allgemein und beispielhaft auf die WO 2010/023299 A2, DE 103 19 246 A1, DE 10 2006 022 279 A1 sowie die DE 103 00 284 verwiesen.

Derartig abgewinkelte Rotorblattspitzen stellen jedoch gerade beim Transport der Rotorblätter zum Aufstellungsort der Windenergieanlage einen sehr empfindlichen Bestandteil des Rotorblatts dar. Auch bei der Herstellung eines Rotorblatts - beispielsweise während des Lackierens - ist die Handhabung von Rotorblättern mit abgewinkelten Rotorblattspitzen schwierig.

Eine Aufgabe der vorliegenden Erfindung ist es daher, eine Lösung vorzuschlagen, durch die sich die Handhabung und/oder der Transport bekannter Rotorblätter im Hinblick auf Beschädigungen, besonders der empfindlichen Rotorblattspitze vereinfacht.

### Beschreibung der Erfindung

Diese Aufgabe wird mit einem Rotorblatt gemäß Anspruch 1 gelöst. Vorteilhafte Ausführungsbeispiele sowie Weiterbildungen der Erfindung sind in den Unteransprüchen angegeben.

Das erfindungsgemäße Rotorblattermöglicht es, dass Rotorblätter ohne Rotorblattspitze hergestellt werden können und damit leichter gehandhabt werden können. Des Weitern sind solche Rotorblätter weniger anfällig beim Transport zur Windenergieanlage beschädigt zu werden. Schließlich kann bei einem erfindungsgemäßen Rotorblatt die Rotorblattspitze bei Beschädigung im Betrieb leicht vor Ort gewechselt werden.

Eine erfindungsgemäße Rotorblattspitze für ein Rotorblatt, insbesondere für ein Rotorblatt einer Windenergieanlage ist als ein selbständiges, mit dem Rotorblatt verbindbares Teil ausgestaltet. Die Rotorblattspitze besitzt eine erste Verbindungsfläche, die in Richtung des zu verbindenden Rotorblattes gerichtet ist und enthält Führungsmittel und Verriegelungsmittel als erste Bestandteile eines Verbindungmechanismus zum Verbinden mit einem entsprechend ausgelegten Rotorblatt.

Zur Herstellung der Verbindung mit dem Rotorblatt sind an der Verbindungsfläche erste Führungsmittel mit einer Führungsrichtung vorgesehen, die beim Herstellen der Verbindung mit dem Rotorblatt die Rotorblattspitze so führen, dass die Verbindung mechanisch zuverlässig und die Verriegelungsmittel des Verbindungmechanismus ohne Beschädigung richtig zueinander positioniert werden und bestimmungsgemäß zusammenwirken können. Daher sind weiter erste Verriegelungsmittel zum Befestigen der Rotorblattspitze an dem Rotorblatt zum sicheren Befestigen der Rotorblattspitze vorgesehen.

Die ersten Führungsmittel können aus wenigstens einem parallel zur Führungsrichtung angeordneten Steckelement bestehen. Als Steckelemente können beispielsweise Stifte oder Bolzen an der Rotorblattspitze vorgesehen werden. Das Steckelement kann je nach Dimensionierung und Material hohl oder massiv ausgeführt sein.

Die ersten Verriegelungsmittel an der Rotorblattspitze können aus wenigstens einem ersten Verbindungselement, beispielsweise einem Zapfen, zum Herstellen einer, bevorzugt lösbaren, formschlüssigen Verbindung mit am Rotorblatt vorgesehenen zweiten Verriegelungsmitteln, d. h. mindestens einem korrespondierenden zweiten Verbindungselement, bestehen. Das wenigstens eine erste Verriegelungselement kann zentral an der ersten Verbindungsfläche angeordnet sein und eine parallel zur Führungsrichtung liegende Verbindungsfläche besitzen.

Bei der Ausführung mit einem Zapfen als erstes Verbindungselement besitzt der Zapfen eine parallel zur Führungsrichtung liegende Zapfenfläche als Verbindungsfläche, in der beispielsweise wenigstens eine Ausnehmung vorgesehen werden kann, deren Form dann zu der des zweiten Verbindungselements am Rotorblatt komplementär ausgestaltet ist.

Am ersten Verbindungselement kann weite eine erste Sicherungskomponente beispielsweise eine, bevorzugt zur Führungsrichtung senkrechte, Öffnung, beispielsweise eine Bohrung, vorgesehen sein. In bzw. durch diese Öffnung kann ein Sicherungselement zur Sicherung und bevorzugt zur Betätigung des Verbindungmechanismus eingreifen.

Hinsichtlich der Form der Rotorblattspitze sei angemerkt, dass diese bevorzugt einen Rotorblattspitzenverbindungsabschnitt mit einem eine Druckseite und eine Saugseite aufweisenden aerodynamischen Profil besitzt, in dem sich die ersten Bestandteile des Verbindungsmechanismus befinden. Die Rotorblattspitze hat weiter einen Rotorblattspitzenendabschnitt, der ebenfalls ein die Druck- und die Saugseite aufweisendes aerodynamisches Profil besitzt und in dem die Rotorblattspitze sich bevorzugt verjüngt und besonders bevorzugt als Randbogen, besonders bevorzugt mit einer Spitze, ausläuft.

Die Rotorblattspitze ist bevorzugt abgewinkelt ausgestaltet. Dazu ist der Rotorblattspitzendabschnitt ähnlich wie ein Winglet aus der Ebene des Rotorblattspitzenverbindungsabschnitts herausgebogen, d. h. abgewinkelt. Im Gegensatz zu den an Flugzeugtragflächen bekannten Winglets ist die Spitze der Rotorblattspitze jedoch in Richtung der Druckseite abgewinkelt. In bestimmten Ausführungen kann der Rotorblattspitzenabschnitt in seiner Mittenebene um etwa 4 bis 8°, bevorzugt 4 bis 6°, besonders bevorzugt um etwa 5° um die Fädelachse der Rotorblattspitze herum gedreht sein.

Um im Falle von Gewittern eine vorbestimmte Einschlagstelle für Blitze zu gewährleisten, damit die Rotorblattspitze als Blitzfänger fungiert, ist sie bevorzugt aus Metall hergestellt. Aluminium eignet sich aufgrund seiner guten elektrischen Leitfähigkeit und seines geringen spezifischen Gewichts besonders gut. Die Rotorblattspitze dient dann als Blitzfänger und kann gefangene Blitze in geeignete in das Rotorblatt integrierte Ableitmittel weiterleiten, um dadurch die Windenergieanlage im Fall eines Blitzeinschlages wirksam zu schützen.

Die Rotorblattspitze kann außerdem hohl ausgeführt werden. Eine hohle Rotorblattspitze kann zur Beseitigung bzw. Verminderung von Eisansatz, beheizt werden, beispielsweise vom Rotorblatt her mit Warmluft durchströmt werden.

Ein erfindungsgemäßes Rotorblatt, insbesondere für eine Windenergieanlage, besitzt einen Rotorblattrumpf, der bekanntermaßen zwischen einer Rotorblattvorderkante und einer Rotorblatthinterkante liegendes, eine Druckseite und eine Saugseite aufweisendes, aerodynamisches Profil besitzt.

An einem ersten Ende des Rotorblattrumpfes befindet sich eine Rotorblattwurzel und an einem dem ersten Ende gegenüberliegenden zweiten Ende die erfindungsgemäße Rotorblattspitze. Somit ist bei dem erfindungsgemäßen Rotorblatt eine erfindungsgemäße Rotorblattspitze mit einem erfindungegemäßen Verbindungsmechanismus verbunden. Daher sind für die Verbindung mit der Rotorblattspitze am Rotorblattrumpf die zweiten Bestandteile des Verbindungmechanismus vorzusehen, die zu den ersten Führungsmitteln der Rotorblattspitze komplementäre zweite Führungsmittel sowie mit den ersten Verriegelungsmitteln der Rotorblattspitze zusammenwirkende zweite Verriegelungsmittel enthalten. Ein erfindungsgemäßes Rotorblatt ist daher zur Verbindung mit der erfindungsgemäßen Rotorblattspitze eingerichtet.

Die zweiten Führungsmittel können entsprechend den ersten Führungsmitteln an der Rotorblattspitze aus wenigstens einem parallel zur Führungsrichtung angeordneten zweiten Steckelement bestehen. Beispielsweise können die zweiten Führungsmittel, wenn die ersten Führungsmittel als wenigstens ein Stift oder Bolzen ausgeführt sind, als eine dazu passende dimensionierte Buchse ausgeführt werden.

Die zweiten Verriegelungsmittel können wenigstens ein zweites Verbindungselement, beispielsweise einen Riegel, zum Herstellen der, bevorzugt lösbaren, formschlüssigen Verbindung mit dem wenigstens einen an der Rotorblattspitze vorgesehenen korrespondierenden ersten Verbindungselement enthalten.

Wenn das zweite Verbindungselement in einem Riegel besteht, kann dieser Riegel beispielsweise verschiebbar oder drehbar beweglich am Rotorblattrumpf befestigt sein. Weiter können Spannmittel vorgesehen sein, die den beweglichen Riegel in die Verriegelungsstellung vorspannen.

Der Riegel besitzt eine in der Verriegelungsstellung parallel zur Führungsrichtung ausgerichtete bzw. liegende Riegelfläche. An der Riegelfläche kann dann beispielsweise ein Riegelelement vorgesehen sein, dessen Form zu der des ersten Verbindungselements der Rotorblattspitze komplementär ist. Somit kann zwischen den ersten und zweiten Verriegelungsmitteln in der Verriegelungsstellung eine formschlüssige Verbindung hergestellt werden. Diese Verbindung kann wieder gelöst werden, damit die Rotorblattspitze bei Bedarf vom Rotorblattrumpf abgenommen werden kann.

Wenn der Riegel wie vorstehend angesprochen durch geeignete Spannmittel in die Verriegelungsstellung vorgespannt ist, dann wird beim Verbinden der Rotorblattspitze mit dem Rotorblattrumpf die formschlüssige Verbindung zwischen den Verriegelungsmitteln selbsttätig hergestellt.

Zur Sicherung des Verriegelungsmechanismus kann am Riegel eine zweite Sicherungskomponente, beispielsweise eine, bevorzugt in der Verriegelungsstellung zur Führungsrichtung senkrechte Öffnung, bevorzugt eine Gewindebohrung, zum Verbinden mit dem wenigstens einen Sicherungselement vorgesehen werden.

Eine zwischen den ersten und zweiten Verriegelungsmitteln in der Verriegelungsstellung hergestellte formschlüssige Verbindung kann durch das Sicherungselement gesichert werden, indem das Sicherungselement zusammen mit der ersten und zweiten Sicherungskomponente zusammenwirkt und so die formschlüssige Verbindung in Eingriff hält. Beispielsweise kann eine Schraube als Sicherungselement zur Sicherung der Verbindung durch die erste Bohrung im Zapfen der Rotorblattspitze hindurch in die koaxial ausgerichtete zweite Bohrung mit Gewinde im Riegel in Eingriff gebracht und mit vorbestimmter Kraft angezogen werden. Ist der Riegel durch Vorspannmittel in die Verriegelungsstellung vorgespannt, dann ist automatisch gewährleistet, dass die Öffnungen für das Sicherungselement koaxial zueinander ausgerichtet sind.

Mit dem Sicherungselement könnte der Verbindungmechanismus auch betätigt werden, beispielsweise indem sich mittels des Sicherungselements die zweiten Verriegelungsmittel, beispielsweise der Riegel, bewegen lassen.

Selbstverständlich sind auch andere Ausführungen zur Sicherung der formschlüssigen Verbindung möglich - die Maßnahme muss nur die Anordnung der Verbindungselemente zueinander ausreichend sichern, d. h. eine unbeabsichtigte Relativbewegung ausschließen. Jedenfalls muss das Sicherungselement nur so belastbar ausgelegt sein, dass es die formschlüssige Verbindung zwischen den ersten und zweiten Verriegelungsmitteln in der Verriegelungsstellung halten, d. h. sichern kann. Die im Betrieb der Windenergieanlage beispielsweise an der Rotorblattspitze auftretenden Zentrifugalkräfte werden durch die ersten und zweiten Verriegelungsmittel in der Verriegelungsstellung aufgenommen und ins Rotorblatt und von dort in die Rotornabe abgeleitet.

Schließlich sei noch angemerkt, dass selbstverständlich die Anordnung der vorstehend beschriebenen Bestandteile des Verbindungsmechanismus zwischen Rotorblattrumpf und Rotorblattspitze vertauscht werden könnte.

Wenn das Rotorblatt überwiegend aus glasfaserverstärktem Kunststoff besteht, können leitfähige Elemente als Ableitmittel, d. h. Blitzableiter, in das Rotorblatt integriert werden, welche dann mit der- wie oben erwähnt bevorzugt aus Metall gefertigten - Rotorblattspitze beispielsweise über die Führungsmittel in elektrisch gut leitendem Kontakt, d. h. ohne nennenswerten Übergangswiderstand, stehen. Die Ableitmittel können wiederum dazu dienen, die zweiten Bestandteile des Verbindungsmechanismus im Rotorblattrumpf mechanisch zu verankern, damit die im Betrieb auftretenden Zentrifugalkräfte von der Rotorblattspitzte sicher in das Rotorblatt eingeleitet werden können.

Ein erfindungsgemäßes Rotorblatt ermöglicht auch vorteilhaft einen besonders einfachen Austausch von beispielswiese einer im Betrieb durch eine Anprall eines Fremdkörpers beschädigten Rotorblattspitze. Die Erfindung erfasst daher auch eine Windenergieanlage mit einem Rotor, der wenigstens ein Rotorblatt gemäß der Erfindung bzw. wenigstens ein Rotorblatt mit einer Rotorblattspitze gemäß der Erfindung besitzt.

### Kurze Beschreibung der Zeichnungsfiguren

Weitere vorteilhafte Ausgestaltungen der Erfindung, sowie ein Ausführungsbeispiel hierzu, werden nachstehend in Verbindung mit den beigefügten Zeichnungsfiguren näher erläutert. Die innerhalb der Beschreibung des Ausführungsbeispiels verwendeten Begriffe "links", "rechts", "oben", "unten" beziehen sich auf die Zeichnungsfiguren in einer Ausrichtung mit normal lesbaren Figurenbezeichnung und Bezugszeichen. Dabei zeigen:
- Fig. 1: eine Ansicht einer Windenergieanlage mit den wesentlichen Bestandteilen,
- Fig. 2: ein Rotorblatt mit seinen wesentlichen Merkmalen,
- Fig. 3a: eine perspektivische Ansicht einer Ausführung einer Rotorblattspitze gemäß der Erfindung,
- Fig. 3b: eine Draufsicht in Richtung der Druckseite auf die Rotorblattspitze der Fig. 3a,
- Fig. 4: eine perspektivische Ansicht auf die Bestandteile des Verbindungsmechanismus am Rotorblatt mit der Blickrichtung von Rotorblattinneren in Richtung Rotorblattspitze,
- Fig. 5: eine Seitenansicht einer perspektivischen Darstellung von Rotorblattrumpf und Rotorblattspitze gemäß der Erfindung und
- Fig. 6: eine perspektivische Ansicht der ersten und zweiten Verriegelungsmittel der erfindungsgemäßen Verbindung zwischen Rotorblatt und Rotorblattspitze.

### Beschreibung der Ausführungsbeispiele

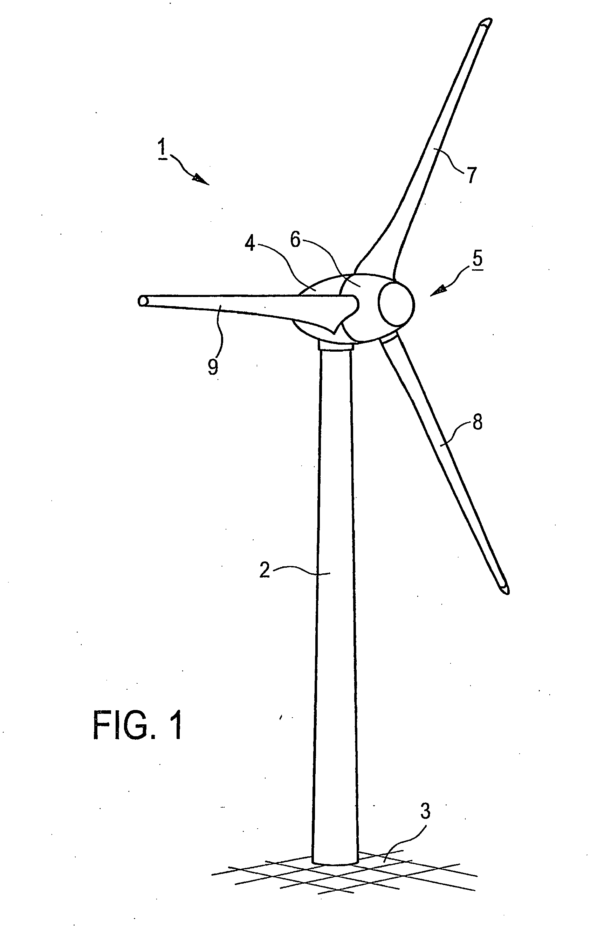

Fig. 1 zeigt eine Windenergieanlage 1 mit einem Turm 2, der auf einem Fundament 3 errichtet ist. Am oberen, dem Fundament 3 gegenüberliegenden Ende befindet sich eine Gondel 4 (Maschinenhaus) mit einem Rotor 5, der im Wesentlichen aus einer Rotornabe 6 und daran angebrachten Rotorblättern 7, 8 und 9 besteht. Der Rotor 5 ist mit einem elektrischen Generator im Inneren der Gondel 4 zur Wandlung von mechanischer Arbeit in elektrische Energie gekoppelt. Die Gondel 4 ist drehbar auf einem Turm 2 gelagert, dessen Fundament 3 die notwendige Standsicherheit gibt.

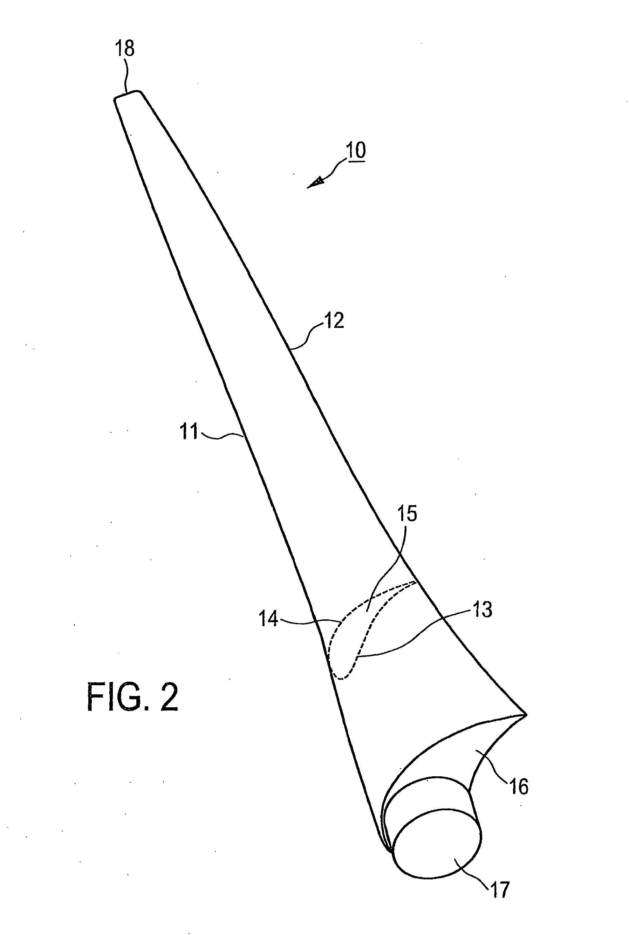

Fig. 2 zeigt ein einzelnes Rotorblatt 10. Das Rotorblatt 10 kann im Wesentlichen durch den Verlauf der Rotorblattvorderkante 11 und der Rotorblatthinterkante 12 sowie dem dazwischen liegenden eine Druckseite 13 und eine Saugseite 14 aufweisenden aerodynamischen Profil 15 beschrieben werden. Im Bereich des im an einer Windenergieanlage montierten Zustand benachbart zur Rotornabe liegenden Endes des Rotorblattes 10, welches als Rotorblattwurzel 16 bezeichnet wird, befindet sich am dargestellten Rotorblatt ein Rotorblattanschluss 17 zur mechanischen Verbindung mit der Rotornabe. Am der Rotorblattwurzel gegenüberliegenden Ende des Rotorblatts 10 befindet sich eine Rotorblattspitze 18.

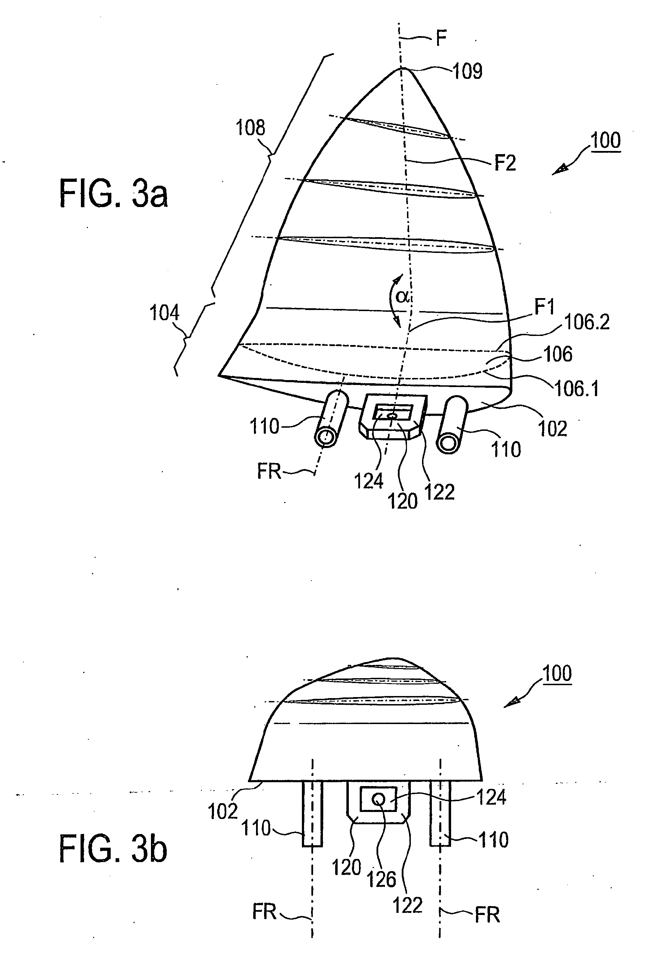

Figuren 3a und 3b zeigen zwei verschiedene Ansichten einer erfindungsgemäßen Rotorblattspitze 100, die auch als Rotorblatttip oder als Randbogen bezeichnet wird. Fig. 3a zeigt eine perspektivische Ansicht einer Ausführung einer Rotorblattspitze gemäß der Erfindung.

Die Rotorblattspitze 100 ist ein selbständiges, mit einem Rotorblatt verbindbares Teil. An einer ersten Verbindungsfläche 102, die in Richtung eines Rotorblatts als Verbindungspartner gerichtet ist, sind zur Führung bei der Herstellung der Verbindung mit dem Rotorblatt als erste Führungsmittel zwei hole Bolzen oder Stifte 110 vorgesehen. Die Anordnung der Stifte 110 bewirkt eine vorbestimmte Führungsrichtung FR beim Herstellen der Verbindung mit dem Rotorblatt.

Weiter ist an der Rotorblattspitze 100 als erste Verriegelungsmittel zum Befestigen der Rotorblattspitze 100 an dem Rotorblatt ein Zapfen 120 als ein erstes Verbindungselement vorgesehen. Der Zapfen 120 dient zum Herstellen einer, bevorzugt lösbaren, formschlüssigen Verbindung mit wenigstens einem am Rotorblatt vorgesehenen korrespondierenden zweiten Verbindungselement.

Die ersten Führungsmittel und die ersten Verriegelungsmittel stellen erste Bestandteile eines erfindungsgemäßen Verbindungmechanismus zwischen Rotorblatt und Rotorblattspitze dar.

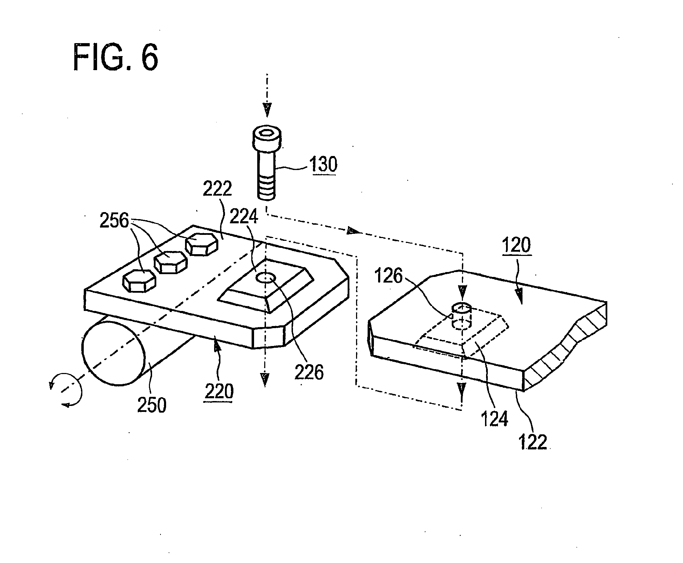

Der Zapfen 120 ist nahezu zentral an der ersten Verbindungsfläche 102 angeordnet und besitzt eine parallel zu der Führungsrichtung FR liegende Zapfenfläche 122. In der Zapfenfläche 122 ist wenigstens eine Ausnehmung 124 vorgesehen, das zur Aufnahme eines zweiten Verbindungselements am Rotorblatt dient. Die Form der Ausnehmung 124 ist daher idealerweise zu der des zweiten Verbindungselements am Rotorblatt komplementär (vgl. Fig. 6).

Im Zapfen 120 ist eine zur Führungsrichtung FR senkrechte Öffnung als eine erste Sicherungskomponente in Form einer Bohrung 126 vorgesehen, durch die ein Sicherungselement (vgl. Fig. 6, 130) zur Sicherung und Betätigung des Verbindungmechanismus zwischen der Rotorblattspitze 100 und einem Rotorblatt durchgesteckt werden kann.

Die Rotorblattspitze 100 kann in einen Rotorblattspitzenverbindungsabschnitt 104 mit einem eine Druckseite 106.1 und eine Saugseite 106.2 mit einem aerodynamischen Profil 106 und einen Rotorblattspitzenendabschnitt 108 mit einem die Druck- und die Saugseite aufweisenden aerodynamischen Profil untergliedert werden. Am Rotorblattspitzenverbindungsabschnitt 104 sind die ersten Bestandteile des Verbindungsmechanismus angeordnet.

In der Darstellung der Rotorblattspitzte 100 der Fig. 3 ist die Fädelachse F angedeutet. Die Fädelachse F ist eine gedachte Achse, auf die, wenn man sich die Rotorblattspitze 100 als aus einzelnen infinitesimal dünnen Abschnitten oder Scheiben, die im Wesentlichen jeweils die Form des jeweiligen aerodynamisch wirksamen Profils aufweisen, zusammengesetzt vorstellt, alle Abschnitte aufzufädeln sind, damit sich die gewünschte Rotorblattform ergibt.

Der Randbogen in Fig. 3a ist mit drei solchen Profilschnitten als Beispiele dargestellt ist. Die Lage der drei verschiedenen Profilschnitten veranschaulicht eine Drehung des Profils des Randbogens um die Fädelachse F herum. Dabei ist die dargestellte Drehung vom Betrag her größer als eine praktische Gradzahl, um aus Darstellungsgründen die Darstellung in der zeichnerischen Darstellung überhaupt einigermaßen wahrnehmbar zu machen. Die Drehung kann beispielsweise 5 Grad betragen, was einem guten Kompromiss zwischen verringerter Schallemission und erhöhter Belastung darstellt.

Die Rotorblattspitze 100 verjüngt sich im Rotorblattspitzenendabschnitt 108 und endet dort als Randbogen mit einer Spitze 109. Der Rotorblattspitzenendbereich 108 ist gegenüber der Rotorblattebene des Rotorblattspitzenanschlussbereiches 104 von der Saugseite 106.1 des Rotorblattspitzenanschlussbereichs 104 weg, also zur Druckseite 106.2 hin abgewinkelt bzw. abgebogen. Der Rotorblattspitzenendbereich 108 der Rotorblattspitze 100 ist in einem Winkel α gegenüber einem ersten Teilabschnitt F1 der Fädelachse F abgeknickt. Für den Rotorblattspitzenendbereich 108 ist ein zweiter Teilabschnitt F2 der Fädelachse F dargestellt. Zwischen den beiden Teilabschnitten F1 und F2 ist ein Winkel α angegeben, der die Abwinkelung des Rotorblattspitzenendabschnitt 108 beschreibt. Der Winkel α beträgt bevorzugt zwischen 120° und 90°.

Fig. 3b zeigt eine Draufsicht auf die Druckseite 106.2 der Rotorblattspitze der Fig. 3a.

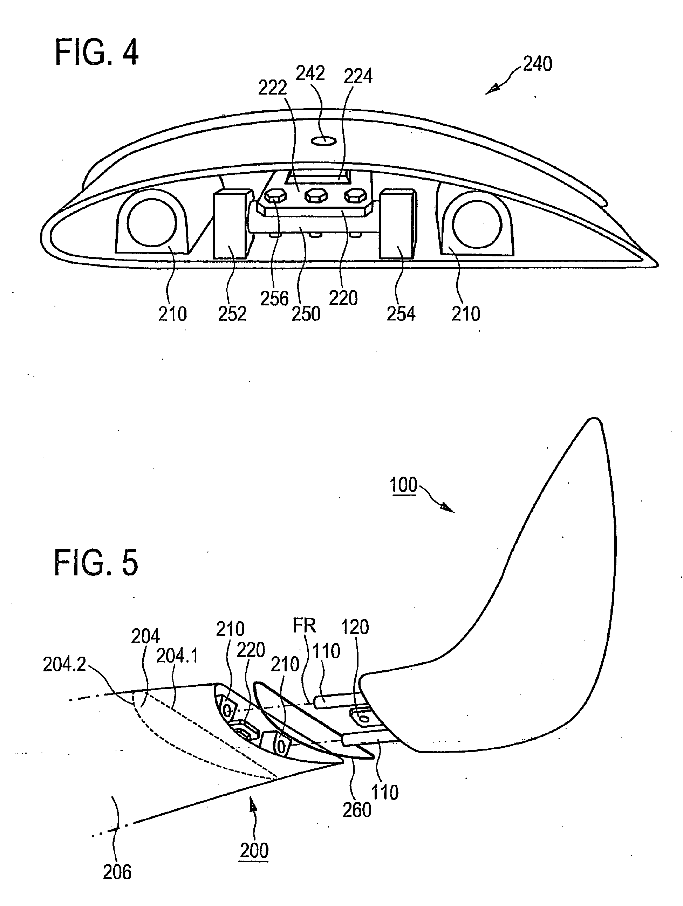

Fig. 4 zeigt eine perspektivische Ansicht auf die Bestandteile des Verbindungsmechanismus am Rotorblattrumpf, wobei die Blickrichtung vom Rotorblattinneren in Richtung Rotorblattspitze verläuft. Die rotorblattrumpfseitigen Bestandteile des Verbindungsmechanismus sind in einem Einsatz 240, der ähnlich wie die Rotorblattspitze bevorzugt aus Metall, besonders bevorzugt aus Aluminium besteht, enthalten. Der Einsatz 240 kann bei der Fertigung in den Rotorblattrumpf integriert werden.

Zur Einleitung der im Betrieb des Rotorblattes am Verbindungsmechanismus auftretenden Kräfte wird der Einsatz 240 mit in Längsrichtung weit in das Rotorblatt verlaufenden Zugelementen verankert. Idealerweise können die Verankerungselemente ebenfalls aus einem elektrisch leitfähigen Material gefertigt sein und somit neben der Verankerungsfunktion für die Verbindung zwischen Rotorblattrumpf und Rotorblattspitze auch als Ableitmittel die Blitzableitungsfunktion übernehmen, insbesondere wenn die bevorzugt aus Metall gefertigte Rotorblattspitze als Blitzfänger fungieren soll.

Für die Verbindung mit der Rotorblattspitze sind im Einsatz 240 für den Rotorblattrumpf (Fig. 5, 206) die zweiten Bestandteile des Verbindungmechanismus vorgesehen. D. h., im Einsatz 240 befinden sich zwei Buchsen 210 als die zu den ersten Führungsmitteln (Fig. 5, 110) der Rotorblattspitze (Fig. 5, 100) komplementären zweiten Führungsmittel. Weiter ist einen drehbar beweglicher Riegel 220 als zweites Verbindungselement zum Herstellen der lösbaren, formschlüssigen Verbindung mit dem wenigstens einen an der Rotorblattspitze (100) vorgesehenen korrespondierenden Zapfen (Fig. 5, 120) als erstes Verbindungselement der Rotorblattspitze enthalten.

Die Buchsen 210 als die zweiten Führungsmittel sind ebenfalls parallel zur Führungsrichtung FR angeordnet und gewährleisten, dass beim Herstellen der Verbindung zwischen Rotorblattspitze und Rotorblattrumpf die ersten und zweiten Verriegelungselemente für eine ordnungsgemäße Funktion des Verbindungsmechanismus zueinander richtig positioniert werden.

Der Riegel 220 ist mit einer drehbar in Lagern 252, 254 gelagerten Achse beispielsweise mit Schrauben 256 oder gesicherten Bolzen verbunden und so beweglich am Rotorblattrumpf (Fig. 5, 206) befestigt. In Verriegelungsstellung besitzt der Riegel 220 eine parallel zur Führungsrichtung FR liegende Riegelfläche 222. Am Riegel 220 ist ein Riegelelement 224 vorgesehen, dessen Form zu der Ausnehmung im Zapfen 120 an der Rotorblattspitze als das erste Verbindungselement komplementär geformt. Zur Betätigung des Riegels 220 ist im Einsatz 240 eine Öffnung 242 vorgesehen, durch die ein Sicherungselement, beispielsweise eine Schraube (Fig. 6, 130), mit dem einem im Riegel vorgesehenen Gewinde in Eingriff gebracht werden kann. Damit kann der Riegel - wie noch genauer im Zusammenhang mit Fig. 6 erläutert wird - von Außerhalb des Rotorblatts ggf. betätigt, jedenfalls in der Verriegelungsstellung gesichert werden.

Fig. 5 zeigt eine Seitenansicht von schräg unten auf eine perspektivische Darstellung des Rotorblattrumpfs 206 und der Rotorblattspitze 100 gemäß der Erfindung. Der Rotorblattrumpf 206 mit einem eine Druckseite 204.2 und eine Saugseite 204.1 aufweisenden aerodynamischen Profil 204. Am gegenüber der Rotorblattspitze 100 liegenden Ende des Rotorblattrumpfs 206 befindet sich die Rotorblattwurzel (nicht gezeigt). Zwischen den Stiften 110 als die ersten Führungsmittel an der Rotorblattspitze 100 und den Buchsen 210 als die korrespondierenden zweiten Führungsmitteln am Rotorblattrumpf 206 ist die durch die Zwangsführung beim Herstellen der Verbindung sich automatisch ergebende Führungsrichtung FR - in den Fig. 3a und 3b - mit gestrichelten Linien dargestellt. Weiter ist noch eine optionale Dichtung 260 gezeigt, die zur Abdichtung der Verbindung im Betrieb dient. Die Dichtung 260 kann ein eingelegtes separates Element sein, kann aber auch an einer oder beiden Verbindungsflächen angespritzt werden oder bei entsprechender Formgebung der Flanschflächen ganz entfallen.

Fig. 6 zeigt eine perspektivische Ansicht, in der die ersten und zweiten Verriegelungsmittel der erfindungsgemäßen Verbindung zwischen Rotorblatt und Rotorblattspitze zur Erläuterung deren Funktion freigestellt sind.

Der Riegel 220 ist auf an der Achse 250 mit drei Schrauben 256 befestigt. Da die Achse 250 im Rotorblatt drehbar gelagert ist, ist der Riegel um die Achse 250 drehbar. Am Riegel 220 befindet sich ein Riegelelement 224, dass in seiner Form genau in eine entsprechende Ausnehmung 124 im Zapfen 120 an der Rotorblattspitze passt. D. h., die Ausnehmung 124 ist zu dem Riegelelement 224 komplementär geformt und können damit eine formschlüssig Verbindung miteinander herstellen.

Um die Verriegelungsstellung herbeizuführen, d. h. die Verriegelung zu betätigen, kann eine Schraube 130 als Sicherungselement - nachdem die Rotorblattspitze mit den Führungsmitteln an den Rotorblattrumpf gesteckt worden ist - durch eine Bohrung im Rotorblatt und dem Einsatz (Fig. 4, 240) im Rotorblattrumpf gesteckt werden. Die Schraube geht dann weiter zuerst durch eine Bohrung 126 als erste Sicherungskomponente im Zapfen 120 und greift dann in die zentrale Bohrung 226 als zweite Sicherungskomponente im Riegelelement 224 und Riegel 220. Die Bohrung 226 ist mit einem zur Schraube 130 passenden Gewinde (in der Fig. nur angedeutet) versehen, sodass eine Drehung der Schraube 130 zu einem Eindrehen der Schraube in das Gewinde führt. Wenn die Schraube sich mit ihrem Kopf am Rotorblatt bzw. dem Einsatz 240 abstützt, führt die Drehung der Schraube 130 zu einer Bewegung des Riegels 220 um die Achse 250, d. h. zu einer Betätigung des Verbindungsmechanismus. In Verriegelungsstellung ist die Öffnung 226 im Wesentlichen senkrecht zur Führungsrichtung FR ausgerichtet.

Um die Verriegelungsstellung selbsttätig herbeizuführen, d. h. die Verriegelung automatisch zu betätigen, kann der beweglich gelagerte Riegel 220 auch durch Vorspannmittel, beispielsweise an der Achse 250, in die Anordnung gemäß Verriegelungsstellung vorgespannt werden. Dann wird beim Anfügen der Rotorblattspitze der Riegel 220 vom Zapfen 120 ausgelenkt und kehrt automatisch wieder in die Verriegelungsstellung zurück, sobald das Riegelelement 224 in die Ausnehmung 124 im Zapfen 122 eingreifen bzw. zurückfallen kann.

Das Riegelelement 224 greift in der Verriegelungsstellung genau in die Ausnehmung 124 am Zapfen 120. Damit werden alle im Betreib des Rotorblattes an der Verbindung auftretenden Kräfte durch die ersten und zweiten Verriegelungsmittel übertragen. Die Schraube 130 als Sicherungselement dagegen muss nur die formschlüssige Verbindung sichern und ist besonders vor Scherkräften geschützt. Somit kann das Sicherungselement 130 den Verbindungmechanismus durch Bewegen des Riegels 220 betätigen und in der Verriegelungsstellung sichern.

Das beschriebene erfindungsgemäße Rotorblatt kann als Teil eines Rotors einer Windenergieanlage beispielsweise der Fig. 1 verwendet werden.

## Patentansprüche

1. Rotorblatt (200), insbesondere für eine Windenergieanlage (1), bestehend aus einem Rotorblattrumpf (206) mit
einem eine Druckseite (204.2) und eine Saugseite (204.1) aufweisenden aerodynamischen Profil (204),
einer Rotorblattwurzel an einem ersten Ende des Rotorblattrumpfes (206)
und an einem dem ersten Ende gegenüberliegenden zweiten Ende einer Rotorblattspitze (100),
wobei die Rotorblattspitze (100) ein selbständiges, mit dem Rotorblatt (200) verbindbares Teil ist und eine erste Verbindungsfläche (102), die in Richtung des zu verbindenden Rotorblattes gerichtet ist, besitzt und zur Herstellung der Verbindung mit dem Rotorblatt (200) an der Verbindungsfläche (102) erste Führungsmittel (110) mit einer Führungsrichtung (FR) beim Herstellen der Verbindung mit dem Rotorblatt (200) sowie erste Verriegelungsmittel (120) zum Befestigen der Rotorblattspitze (100) an dem Rotorblatt (200) als erste Bestandteile eines Verbindungmechanismus enthält und
wobei für die Verbindung mit der Rotorblattspitze (100) der Rotorblattrumpf (206) zweite Bestandteile des Verbindungmechanismus besitzt, die zu den ersten Führungsmitteln (110) der Rotorblattspitze (100) komplementäre zweite Führungsmittel (210) sowie mit den ersten Verriegelungsmitteln (120) der Rotorblattspitze (100) zusammenwirkende zweite Verriegelungsmittel (220) enthalten und
wobei die ersten Verriegelungsmittel (120) an der Rotorblattspitze (100) wenigstens einen Zapfen (120) als ein erstes Verbindungselement zum Herstellen einer, bevorzugt lösbaren, formschlüssigen Verbindung mit wenigstens einem am Rotorblatt (200) vorgesehenen korrespondierenden zweiten Verbindungselement aufweisen und
wobei die zweiten Verriegelungsmittel (220) wenigstens einen Riegel (220) als zweites Verbindungselement zum Herstellen der, bevorzugt lösbaren, formschlüssigen Verbindung mit dem wenigstens einen an der Rotorblattspitze (100) vorgesehenen korrespondierenden ersten Verbindungselement enthalten, wobei der Riegel bevorzugt in eine Verriegelungsstellung vorgespannt ist und
Spannmittel vorgesehen sind, die den Riegel in die Verriegelungsstellung vorspannen.

2. Rotorblatt nach Anspruch 1,
**dadurch gekennzeichnet, dass** die zweiten Führungsmittel (210) aus wenigstens einem parallel zur Führungsrichtung (FR) angeordneten zweiten Steckelement, bevorzugt einer zum Stift oder Bolzen der Rotorblattspitze (100) passenden Buchse (210), bestehen.

3. Rotorblatt nach einem der vorstehenden Ansprüche 1 oder 2, **dadurch gekennzeichnet, dass** der Riegel (220) beweglich am Rotorblattrumpf (206) befestigt ist und in der Verriegelungsstellung eine parallel zur Führungsrichtung (FR) liegende Riegelfläche (222) besitzt.

4. Rotorblatt nach einem der vorstehenden Ansprüche,
**dadurch gekennzeichnet, dass** der Riegel (220) ein Riegelelement (224) besitzt, dessen Form zu der des ersten Verbindungselements der Rotorblattspitze (100) komplementär ist.

5. Rotorblatt nach einem der vorstehenden Ansprüche,
**dadurch gekennzeichnet, dass** der Riegel (220) eine, bevorzugt in der Verriegelungsstellung zur Führungsrichtung (FR) senkrechte Öffnung (226), bevorzugt eine Gewindebohrung, für das wenigstens eine Sicherungselement (130) besitzt und derart am Rotorblattrumpf befestigt ist, dass das Sicherungselement (130) den Verbindungmechanismus durch Bewegen des Riegels (220) derart betätigen kann und in der Verriegelungsstellung sichern kann.

6. Rotorblatt nach einem der vorstehenden Ansprüche,
**dadurch gekennzeichnet, dass** das Rotorblatt (200) aus glasfaserverstärktem Kunststoff besteht, und dass leitfähige Elemente als Blitzableiter in das Rotorblatt (200) integriert sind, welche mit der, bevorzugt aus Metall gefertigten, Rotorblattspitze (100), bevorzugt über die Führungsmittel (110), in elektrisch leitendem Kontakt stehen.

7. Rotorblatt nach einem der vorstehenden Ansprüche,
**dadurch gekennzeichnet, dass** die ersten Führungsmittel (110) aus wenigstens einem parallel zur Führungsrichtung (FR) angeordneten Steckelement, bevorzugt einem Stift (110) oder Bolzen, bestehen.

8. Rotorblatt nach einem der vorstehenden Ansprüche,
**dadurch gekennzeichnet, dass** der Zapfen (120) bevorzugt zentral an der ersten Verbindungsfläche (102) angeordnet ist und eine parallel zur Führungsrichtung (FR) liegende Zapfenfläche (122) besitzt.

9. Rotorblatt nach Anspruch 8,
**dadurch gekennzeichnet, dass** der Zapfen (120) in der Zapfenfläche (122) wenigstens eine Ausnehmung (124) besitzt, deren Form zu der des zweiten Verbindungselements (222) komplementär ist.

10. Rotorblatt nach einem der vorherigen Ansprüche,
**dadurch gekennzeichnet, dass** das erste Verbindungselement eine, bevorzugt zur Führungsrichtung (FR) senkrechte Öffnung (126), bevorzugt eine Bohrung, für wenigstens ein Sicherungselement (130) zur Sicherung und bevorzugt zur Betätigung des Verbindungmechanismus besitzt.

11. Rotorblatt nach einem der vorherigen Ansprüche,
**gekennzeichnet durch** einen Rotorblattspitzenverbindungsabschnitt (104) mit einem eine Druckseite (106.1) und eine Saugseite (106.2) aufweisenden aerodynamischen Profil (106), in dem sich die ersten Bestandteile des Verbindungsmechanismus befinden, und einen Rotorblattspitzenendabschnitt (108) mit einem die Druck- und die Saugseite aufweisenden aerodynamischen Profil,
wobei die Rotorblattspitze (100) sich im Rotorblattspitzenendabschnitt (108) bevorzugt verjüngt und besonders bevorzugt in einer Spitze (109) endet,
und wobei sich der Rotorblattspitzendabschnitt (108) wie ein Winglet aus der Ebene des Rotorblattspitzenverbindungsabschnitts (104) in Richtung der Druckseite heraushebt, und der Rotorblattspitzenabschnitt (108) insbesondere in seiner Mittenebene um etwa 4 bis 8°, bevorzugt 4 bis 6°, besonders bevorzugt um etwa 5° um die Fädelachse der Rotorblattspitze (100) herum gedreht ist.

12. Rotorblatt nach einem der vorherigen Ansprüche,
**dadurch gekennzeichnet, dass** die Rotorblattspitze (100) aus Metall, insbesondere Aluminium, besteht und bevorzugt hohl ausgeführt ist.

13. Windenergieanlage (1) mit einem Rotor, der wenigstens ein Rotorblatt gemäß einem der vorhergehenden Ansprüche.

## Claims

1. Rotor blade (200), in particular for a wind turbine (1), comprising a rotor blade body (206) having
an aerodynamic profile (204) which has a pressure side (204.2) and an intake side (204.1),
a rotor blade root at a first end of the rotor blade body (206)
and a rotor blade tip (100) at a second end opposite the first end,
the rotor blade tip (100) being an independent component which can be connected to the rotor blade (200) and having a first connection face (102) which is directed in the direction of the rotor blade to be connected and, in order to produce the connection to the rotor blade (200) on the connection face (102), containing first guiding means (110) having a guiding direction (FR) when the connection to the rotor blade (200) is produced and first locking means (120) for securing the rotor blade tip (100) to the rotor blade (200) as first components of a connection mechanism, and
the rotor blade body (206) comprising for the connection to the rotor blade tip (100) second components of the connection mechanism which contain second guiding means (210) which complement the first guiding means (110) of the rotor blade tip (100) and second locking means (220) which cooperate with the first locking means (120) of the rotor blade tip (100), and
the first locking means (120) on the rotor blade tip (100) having at least one journal (120) as a first connection element for producing a preferably releasable positive-locking connection to at least one corresponding second connection element which is provided on the rotor blade (200) and
the second locking means (220) having at least one bar (220) as a second connection element for producing the preferably releasable positive-locking connection to the at least one corresponding first connection element which is provided on the rotor blade tip (100), the bar preferably being pretensioned into a locking position, and
there being provided clamping means which pretension the bar into the locking position.

2. Rotor blade according to claim 1,
**characterised in that** the second guiding means (210) comprise at least one second insertion element which is arranged parallel with the guiding direction (FR), preferably a socket (210) which fits the pin or bolt of the rotor blade tip (100).

3. Rotor blade according to either of the preceding claims 1 or 2, **characterised in that** the bar (220) is movably secured to the rotor blade body (206) and in the locking position has a locking face (222) which is located parallel with the guiding direction (FR).

4. Rotor blade according to any one of the preceding claims, **characterised in that** the bar (220) has a locking element (224) whose shape complements that of the first connection element of the rotor blade tip (100).

5. Rotor blade according to any one of the preceding claims, **characterised in that** the bar (220) has an opening (226) which is preferably perpendicular relative to the guiding direction (FR) in the locking position, preferably a threaded hole, for the at least one securing element (130) and is secured to the rotor blade body in such a manner that the securing element (130) can thereby actuate the connection mechanism and can secure it in the locking position by the bar (200) being moved.

6. Rotor blade according to any one of the preceding claims, **characterised in that** the rotor blade (200) comprises glass-fibre-reinforced plastics material, and **in that** conductive elements are integrated in the rotor blade (200) as lightning conductors which are in electrically conductive contact, preferably via the guiding means (110), with the rotor blade tip (100) which is preferably produced from metal.

7. Rotor blade according to any one of the preceding claims, **characterised in that** the first guiding means (110) comprise at least one insertion element, preferably a pin (110) or a bolt, which is arranged parallel with the guiding direction (FR).

8. Rotor blade according to any one of the preceding claims, **characterised in that** the journal (120) is preferably arranged centrally on the first connection face (102) and has a journal face (122) which is located parallel with the guiding direction (FR).

9. Rotor blade according to claim 8,
**characterised in that** the journal (120) has in the journal face (122) at least one recess (124) whose shape complements that of the second connection element (222).

10. Rotor blade according to any one of the preceding claims, **characterised in that** the first connection element has an opening (126), which is preferably perpendicular relative to the guiding direction (FR), preferably a hole, for at least one securing element (130) for securing and preferably for actuating the connection mechanism.

11. Rotor blade according to any one of the preceding claims, **characterised by** a rotor blade tip connection portion (104) having an aerodynamic profile (106) which has a pressure side (106.1) and an intake side (106.2) and in which the first components of the locking mechanism are located, and a rotor blade tip end portion (108) having an aerodynamic profile which has the pressure side and the intake side,
the rotor blade tip (100) preferably tapering in the rotor blade tip end portion (108) and terminating with a tip (109) in a particularly preferred manner,
and the rotor blade tip end portion (108) protruding in the manner of a winglet from the plane of the rotor blade tip connection portion (104) in the direction of the pressure side and the rotor blade tip end portion (108) being rotated in particular in the centre plane thereof through approximately from 4 to 8°, preferably from 4 to 6°, in a particularly preferable manner through approximately 5°, about the insertion axis of the rotor blade tip (100).

12. Rotor blade according to any one of the preceding claims, **characterised in that** the rotor blade tip (100) comprises metal, in particular aluminium, and is preferably constructed in a hollow manner.

13. Wind turbine (1) having a rotor which has at least one rotor blade according to any one of the preceding claims.

## Revendications

1. Pale de rotor (200), en particulier pour une installation d'énergie éolienne (1), constituée d'un corps de lame (206) ayant
un profil aérodynamique (204) qui présentent un côté de pression (204.2) et un côté d'aspiration (204.1),
un pied de pale à une première extrémité du corps de lame (206) et une extrémité de pale de rotor (100) à une deuxième extrémité opposée à la première extrémité,
dans laquelle l'extrémité de pale de rotor (100) comprend une partie indépendante, pouvant être liée à la pale de rotor (200), et une première surface de liaison (102) dirigée en direction de la pale de rotor à lier, et contient afin de fabriquer la liaison avec la pale de rotor (200) à la surface de liaison (102), des premiers moyens de guidage (110) avec une direction de guidage (FR) pour la fabrication de la liaison avec la pale de rotor (200) ainsi qu'un premier moyen de verrouillage (120) pour la fixation de l'extrémité de pale de rotor (100) à la pale de rotor (200) comme premier composant d'un mécanisme de liaison, et
où pour la liaison avec l'extrémité de pale de rotor (100), le fuselage de pale de rotor (206) possède des deuxièmes parties du mécanisme de liaison, qui comportent des deuxièmes moyens de guidage (210) complémentaires aux premiers moyens de guidage (110) de la pale de rotor (100) ainsi que des deuxièmes moyens de verrouillage (220) fonctionnant ensemble avec le premier moyen de verrouillage (120) de l'extrémité de pale de rotor (100), et
où les premiers moyen de verrouillage (120) comportent au moins un pivot (120) à l'extrémité de pale de rotor (100) comme premier élément de liaison pour la fabrication d'une liaison, de préférence amovible, et de forme compatible avec au moins un deuxième élément de liaison correspondant pourvu à la pale de rotor (200), et
où les deuxièmes moyens de verrouillage (220) contiennent au moins un verrou (220) comme deuxième élément de liaison pour la fabrication de la liaison compatible, de préférence amovible, avec le au moins un élément de liaison pourvu à l'extrémité de pale de rotor (200) correspondante, où le verrou est de préférence pré-tensionné dans une position de verrouillage et
des moyens de serrage pour rappeler le verrou dans la position de verrouillage sont prévus.

2. Pale de rotor selon la revendication 1, **caractérisée en ce que** les deuxièmes moyens de guidage (210) sont composés d'au moins un deuxième élément de fixation disposé parallèlement à la direction de guidage (FR), et comprennent de préférence une douille (210) allant avec une cheville ou un boulon de l'extrémité de pale de rotor (100).

3. Pale de rotor selon la revendication 1 ou 2, **caractérisée en ce que** le verrou (220) est monté de façon amovible sur le corps de pale de rotor (206) et comprend une surface de verrouillage (222) parallèle à la direction de guidage (FR) dans la position de verrouillage.

4. Pale de rotor selon l'une des revendications précédentes, **caractérisée en ce que** le verrou (220) comporte un élément de verrouillage (224) dont la forme est complémentaire à celle du premier élément de raccordement de l'extrémité de pale de rotor (100).

5. Pale de rotor selon l'une des revendications précédentes, **caractérisée en ce que** le verrou (220) comporte une ouverture (226) perpendiculaire, de préférence dans la position de verrouillage à la direction de guidage (FR), de préférence un alésage fileté ayant au moins un élément de sécurité (130), et est fixée sur le corps de pale de rotor, de telle façon que l'élément de sécurité (130) peut sécuriser le mécanisme de verrouillage dans la position de verrouillage par un mouvement du verrou (220).

6. Pale de rotor selon l'une des revendications précédentes, **caractérisée en ce que** la pale de rotor (200) est faite en matière plastique renforcée de fibre de verre, et que les éléments conducteurs sont intégrés à la pale de rotor (200) en tant que paratonnerre, lesquels sont en contact électrique de préférence avec les extrémités de pale de rotor (100) qui sont en métal, de préférence pardessus les moyens de guidage (110).

7. Pale de rotor selon l'une des revendications précédentes, **caractérisée en ce que** le premier moyen de guidage (110) est constitué d'au moins élément enfichable parallèle à la direction de guidage (FR), de préférence une cheville (110) ou des boulons.

8. Pale de rotor selon l'une quelconque des revendications précédentes, **caractérisée en ce que** le pivot (120) est de préférence disposé au centre sur la première surface de liaison (102) et possède une surface de pivot (122) parallèle à la direction de guidage (FR).

9. Pale de rotor selon la revendication 8, **caractérisée en ce que** le pivot (120) possède au moins un évidement (124) dans la surface de pivot (122), dont la forme est complémentaire à celle du deuxième élément de liaison (222).

10. Pale de rotor selon l'une des revendications précédentes, **caractérisée en ce que** le premier élément de liaison possède une ouverture (126) de préférence perpendiculaire à la direction de guidage (FR), de préférence un perçage, pour au moins un élément de protection (130) pour protéger et préférentiellement pour actionner le mécanisme de liaison.

11. Pale de rotor selon l'une des revendications précédentes, **caractérisée par** une portion de liaison d'extrémité de pale de rotor (104) avec un côté de pression (106.1) et un côté d'aspiration (106.2) ayant un profil aérodynamique (106), dans lequel sont placés les premiers composants du mécanisme de liaison, et une portion d'extrémité de pale de rotor (108) avec un profil aérodynamique comportant le côté de pression et le côté d'aspiration,
où l'extrémité de pale de rotor (100) s'effile de préférence dans la portion d'extrémité de pale de rotor (108) et plus particulièrement se termine en une pointe (109),
et où la portion d'extrémité de pale de rotor (108) ressort comme une ailette hors de la surface de la portion de liaison d'extrémité de pale de rotor (104) en direction du côté de pression, et la portion d'extrémité de pale de rotor (108), en particulier en sa surface centrale, est plus particulièrement tournée sur environ 4 à 8°, de préférence entre 4 et 6°, et environ 5° autour de l'axe d'enfilage de l'extrémité de pale de rotor (100).

12. Pale de rotor selon l'une des revendications précédentes, **caractérisée en ce que** l'extrémité de pale de rotor (100) est réalisé en métal, en particulier de l'aluminium, et est de préférence creuse.

13. Dispositif d'énergie éolienne (1) avec un rotor, comprenant au moins une pale de rotor selon l'une des revendications précédentes.
